# EUROPÄISCHE PATENTSCHRIFT

(11) **EP 3 615 886 B1**
(45) Veröffentlichungstag und Bekanntmachung des Hinweises auf die Patenterteilung: **30.08.2023**
(21) Anmeldenummer: 18709953.6
(22) Anmeldetag: 23.02.2018
(51) Int. Cl.: G01B 11/245, G01N 21/88

(54) **PRÜFVORRICHTUNG ZUR OPTISCHEN PRÜFUNG EINES OBJEKTS UND OBJEKTPRÜFUNGSANORDNUNG**
INSPECTION APPARATUS FOR OPTICALLY INSPECTING AN OBJECT, AND OBJECT INSPECTION ARRANGEMENT
DISPOSITIF DE CONTRÔLE POUR LE CONTRÔLE OPTIQUE D'UN OBJET ET SYSTÈME DE CONTRÔLE D'OBJET

(30) Priorität: 27.04.2017 DE 102017207071
(43) Veröffentlichungstag der Anmeldung: 04.03.2020
(73) Patentinhaber: Robert Bosch GmbH, 70442 Stuttgart (DE)
(72) Erfinder: THOBE, Alexander, 70197 Stuttgart (DE); BERGER, Martin, 74385 Pleidelsheim (DE)
(86) Internationale Anmeldenummer: PCT/EP2018/054458
(87) Internationale Veröffentlichungsnummer: WO 2018/197074

(56) Entgegenhaltungen:
- US-A- 5 060 065
- US-A1- 2002 179 679
- US-A1- 2004 150 822
- US-A1- 2006 180 775

## Beschreibung

### Stand der Technik

Die Erfindung betrifft eine Prüfvorrichtung zur optischen, insbesondere deflektometrischen, Prüfung eines Objekts, mit einem Gehäuse, wobei das Gehäuse ein Hohlkörper mit Öffnung ist, wobei das Objekt zur Prüfung in der Öffnung positionierbar ist, mit einer Hauptkamera, wobei die Hauptkamera eine Aufnahmerichtung und Aufnahmeebene aufweist, wobei die Hauptkamera mit Aufnahmerichtung zur Öffnung des Gehäuses angeordnet ist, wobei die Prüfvorrichtung eine Mehrzahl an Lichtquellen umfasst, wobei die Lichtquellen um die Öffnung angeordnet sind, wobei die Lichtquellen zur veränderbaren Beleuchtung der Aufnahmeebene ausgebildet sind, wobei die Hauptkamera ausgebildet ist, für das in der Aufnahmeebene liegende Objekt eine Mehrzahl an Objektbildern aufzunehmen.

Die Oberflächenbeschaffenheit von Gegenständen wird häufig mittels Beleuchtungsvorrichtungen vermessen und/oder überprüft. Dabei werden Bilder des Gegenstandes mit einer Kamera aufgenommen, wobei der Gegenstand mittels einer Diffusorkuppel beleuchtet wird.

Die Druckschrift DE 196 23 949 A1 offenbart eine Vorrichtung zur optischen Prüfung der Oberfläche von Gegenständen mit einer Beleuchtungsvorrichtung, die über eine Diffusorkuppel den darunter befindlichen Gegenstand beleuchtet, einer Videokamera, deren Objektiv am oberen Ende der Diffusorkuppel angeordnet ist und eine einen Rechner enthaltenden Auswertevorrichtung, in der ein Sollbild oder Sollgrauwerte von vorab definierten Flächen des Gegenstandes gespeichert ist/sind, mit dem das von der Kamera aufgenommene Bild verglichen wird/werden zwecks Erzeugung eines Auswerfsignals, wenn die Abweichung zwischen Ist- und Sollbild eine vorgegebene Größe aufweist, wobei die Beleuchtungsvorrichtung Weißlichtlampen aufweist, die ständig eingeschaltet sind.

In der Druckschrift US 2004/0150822 A1 ist eine Vorrichtung zur optischen Inspektion von Leiterplatten beschrieben. Die Vorrichtung umfasst eine Mehrzahl an Lichtquellen und eine Kameraeinheit zur Aufnahme der Leiterplatte. Basierend auf den aufgenommenen Bildern können Bildfehler korrigiert werden und ein 3D-Abbild der Leiterplatte erzeugt werden.

Die Druckschrift US 5 060 065 A beschreibt eine Leiterplatteninspektionsvorrichtung. Diese umfasst ein Beleuchtungssystem und eine Reihe von Kameras. Die Vorrichtung bildet im Wesentlichen eine gewölbte Konfiguration, wobei die Vielzahl von selektiv steuerbaren Leuchtdioden zum Entwickeln gewünschter Beleuchtungsmuster in einer gewölbten Halterung angeordnet ist.

In der Druckschrift 2006/0180775 A1 ist ein Verfahren und eine Vorrichtung zum Untersuchen von Oberflächen von Keramikgeschirr offenbart. Dabei wird das zu untersuchende Keramikgeschirr mittels einer Difusorkuppel beleuchtet, die von einer Mehrzahl an Lichtquellen hinterleuchtet ist. Ein Beobachtungsmittel, beispielsweise eine Kamera, nimmt vom Untersuchungsobjekt Bilder auf.

Die Druckschrift US 2004/150822 A2, die wohl den nächstkommenden Stand der Technik bildet, beschreibt eine Inspektionsvorrichtung für eine Leiterplatte. Dabei wird die Leiterblatte mittels punktförmiger Lichtquellen beleuchtet und anschließend werden Bilder von der Leiterplatte aufgenommen. Basierend auf den Bildern wird ein 3D-Bild der Leiterplatte generiert.

### Offenbarung der Erfindung

Im Rahmen der Erfindung wird eine Prüfvorrichtung zur optischen, insbesondere deflektometrischen, Prüfung eines Objektes mit den Merkmalen des Anspruchs 1 vorgeschlagen. Ferner wird eine Objektprüfungsanordnung mit der Prüfvorrichtung mit den Merkmalen des Anspruchs 13 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Prüfvorrichtung zur optischen, insbesondere deflektometrischen, Prüfung eines Objekts vorgeschlagen. Insbesondere ist die Prüfvorrichtung zur automatischen Prüfung des Objektes ausgebildet. Das Objekt ist beispielsweise ein Werkstück und/oder ein Bauteil, wobei das Objekt bevorzugt eine glänzende und/oder reflektierende Oberfläche aufweist. Die deflektometrische Prüfung des Objektes ist beispielsweise eine optische Inspektion der Oberfläche des Objektes. Insbesondere ist die Prüfvorrichtung ausgebildet, für ein variables Objektspektrum eine deflektometrische Prüfung zu ermöglichen.

Die Prüfvorrichtung weist ein Gehäuse auf. Das Gehäuse ist ein Hohlkörper mit einer Öffnung. Insbesondere weist das Gehäuse einen Innenraum auf. Das Gehäuse ist beispielsweise ein aufgeschnittener Hohlkörper, wobei der aufgeschnittene Hohlkörper eine Schnittfläche aufweist, wobei die Schnittfläche die Öffnung des Hohlkörpers bildet. Ferner weist das Gehäuse vorzugsweise eine Innenseite und eine Außenseite auf. Das Objekt ist zur Prüfung in der Öffnung positionierbar. Insbesondere ist das Objekt zur Prüfung in der Mitte der Öffnung positionierbar, wobei die mittige Position in der Öffnung vorzugsweise die optimale Prüf- und/oder Arbeitsposition für das Objekt ist. Die Öffnung des Gehäuses weist insbesondere eine Kante auf, wobei die Kante den Hohlkörper begrenzt. Die Öffnung in dem Gehäuse ist beispielsweise kreisförmig, ellipsenförmig, dreieckig oder ein beliebiges Polygon.

Die Prüfvorrichtung weist eine Hauptkamera auf. Insbesondere ist die Hauptkamera eine zoombare Kamera, wobei die Hauptkamera verstellbare Bildfelder und/oder Vergrößerungen aufweist. Die Hauptkamera ist vorzugsweise eine Videokamera, alternativ ist die Hauptkamera eine Einzelbildkamera. Insbesondere ist die Hauptkamera eine CCD-Kamera und im Speziellen eine Farbkamera und/oder Schwarz-Weiß-Kamera. Alternativ ist die Hauptkamera eine CMOS-Kamera. Die Hauptkamera weist eine Aufnahmerichtung und eine Aufnahmeebene auf. Insbesondere steht die Aufnahmerichtung senkrecht auf der Aufnahmeebene. Die Aufnahmerichtung ist insbesondere die Richtung, in welche die Hauptkamera Aufnahmen aufnimmt. Die Aufnahmeebene ist vorzugsweise die Ebene, in der ein Gegenstand scharf von der Hauptkamera abbildbar ist. Beispielsweise ist die Aufnahmeebene die Ebene mit maximaler Schärfentiefe.

Die Hauptkamera ist mit Aufnahmerichtung zur Öffnung des Gehäuses angeordnet. Insbesondere schaut die Hauptkamera mit Aufnahmerichtung durch die Öffnung des Gehäuses. Die Hauptkamera ist vorzugsweise so angeordnet, dass die Hauptkamera mit Aufnahmerichtung mittig durch die Öffnung des Gehäuses blickt. Ferner ist es vorzugsweise vorgesehen, dass die Hauptkamera angeordnet ist, dass die Aufnahmerichtung senkrecht auf einer von der Öffnung des Gehäuses aufgespannten Ebene steht.

Die Prüfvorrichtung weist eine Mehrzahl an Lichtquellen auf. Insbesondere weist die Prüfvorrichtung mehr als fünf Lichtquellen, vorzugsweise mehr als zwanzig Lichtquellen und im Speziellen mehr als fünfzig Lichtquellen auf. Die Lichtquellen sind vorzugsweise LEDs. Insbesondere sind die Lichtquellen Weißlichtquellen oder farbige Lichtquellen und im Speziellen RGB-Lichtquellen. Vorzugsweise sind die Lichtquellen Punktlichtquellen, alternativ und/oder ergänzend sind die Lichtquellen flächige Lichtquellen. Die Lichtquellen sind vorzugsweise thermische Lichtquellen, wobei die thermischen Lichtquellen eine Abstrahlcharakteristik in einem breiten Wellenlängenbereich, beispielsweise basierend auf dem Planck'schen Strahlungsgesetz aufweisen. Alternativ und/oder ergänzend sind die Lichtquellen nicht-thermische Lichtquellen, wobei die nicht-thermischen-Lichtquellen insbesondere Linien- und/oder Bandstrahler sind.

Die Lichtquellen sind um die Öffnung in dem Gehäuse angeordnet. Erfindungsgemäß sind die Lichtquellen entlang der Kante der Öffnung angeordnet. Alternativ und/oder ergänzend sind die Lichtquellen auf der Innenseite des Gehäuses angeordnet. Die Lichtquellen sind zur veränderbaren Beleuchtung der Aufnahmeebene ausgebildet. Als veränderbare Beleuchtung wird insbesondere eine wechselnde Beleuchtung durch die Lichtquellen verstanden. Eine veränderbare Beleuchtung ist beispielsweise ein Verändern der Farbzusammensetzung des durch die Lichtquelle abgestrahlten Lichtes und/oder einer Veränderung der Beleuchtungsrichtung durch die Mehrzahl der Lichtquellen. Beispielsweise wird zu einem Zeitpunkt t1 der Aufnahmebereich durch alle Lichtquellen ausgeleuchtet, zu einem anderen Zeitpunkt t2 wird der Aufnahmebereich durch eine Teilmenge der Mehrzahl der Lichtquellen ausgeleuchtet und zu einem Zeitpunkt t3 wird die Aufnahmeebene durch eine andere Teilmenge der Mehrzahl der Lichtquellen ausgeleuchtet. Insbesondere sind die Lichtquellen so angeordnet, dass die Hauptkamera die Aufnahmeebene hell, scharf und/oder kontrastreich aufnehmen und/oder abbilden kann.

Die Hauptkamera ist ausgebildet, für das in der Aufnahmeebene liegende Objekt eine Mehrzahl an Objektbildern aufzunehmen. Insbesondere ist die Hauptkamera ausgebildet, für das in der Aufnahmeebene liegende Objekt mehr als zwei, vorzugsweise mehr als zehn und/oder im Speziellen mehr als fünfzig Objektbilder aufzunehmen. Vorzugsweise sind die Objektbilder zeitlich beabstandet, insbesondere äquidistant zeitlich beabstandet, wobei beispielsweise der zeitliche Abstand zwischen zwei Objektbildern größer ist als eine Millisekunde und/oder kleiner ist als eine Sekunde. Im Speziellen ist die Hauptkamera eine Videokamera und ausgebildet, eine Vielzahl an Objektbildern, insbesondere als Videosequenz, von dem in der Aufnahmeebene liegenden Objekt aufzunehmen.

Die Prüfvorrichtung weist eine Auswerteeinheit auf. Insbesondere ist die Auswerteeinheit datentechnisch mit der Hauptkamera verbunden, wobei der Auswerteeinheit die Objektbilder datentechnisch zur Verfügung gestellt sind und/oder werden. Die Auswerteeinheit ist ausgebildet, auf Basis der Objektbilder eine Topografie des Objektes zu bestimmen. Insbesondere ist die Auswerteeinheit ausgebildet, als Topografie eine Neigungskarte basierend auf den Objektbildern von dem Objekt zu bestimmen. Insbesondere ist die Auswerteeinheit ausgebildet, basierend auf den Objektbildern, der Topografie und/oder der Neigungskarte die Oberfläche des Objektes zu rekonstruieren.

Der Erfindung liegt die Überlegung zugrunde, eine Prüfvorrichtung bereitzustellen, welche das schnelle, automatische und/oder sichere Bestimmen einer Oberflächentopografie und/oder Neigungskarte eines Objektes ermöglicht.

Vorteil ist es, dass durch die Prüfvorrichtung die Oberflächentopografie sicher und schnell bestimmbar ist, wobei alle dazu nötigen Elemente in einer Prüfvorrichtung vereinigt sind.

Erfindungsgemäß umfasst das Gehäuse eine Aussparung. Die Aussparung ist als eine Durchführung und/oder Aufnahme für eine Halterung und/oder eine Handhabungsvorrichtung des Objektes ausgebildet. Insbesondere ist die Aussparung eine Durchführung und/oder Aufnahme für das Objekt. Die Halterung ist beispielsweise ein Achsensystem. Die Handhabungsvorrichtung ist beispielsweise ein Roboter und/oder Roboterarm. Die Halterung und/oder die Handhabungsvorrichtung ist zum Halten, Positionieren und/oder Drehen des Objektes ausgebildet. Die Aussparung ist insbesondere so ausgebildet, dass das Objekt in einer Vielzahl von Positionen, vorzugsweise aller relevanten und/oder nötigen Positionen zur Bestimmung der Topographie, in der Aufnahmeebene positionierbar ist. Dieser Ausgestaltung liegt die Überlegung zugrunde, eine Prüfvorrichtung mit einem Gehäuse bereitzustellen, welche kollisionsfrei für die Topografiebestimmung eines Objektes mit einer Halterung und/oder einer Handhabungsvorrichtung des Objektes verwendbar ist, wobei das Objekt in einer Vielzahl von Positionen in der Aufnahmeebene positionierbar ist.

Insbesondere ist die Aussparung direkt an die Öffnung des Gehäuses anschließend. Insbesondere sind die Aussparung und die Öffnung durch keine Materie voneinander getrennt. Beispielsweise ist die Aussparung als eine direkte Vergrößerung der Öffnung anzusehen. Dieser Ausgestaltung liegt die Überlegung zugrunde, beispielsweise eine Halterung und/oder Handhabungsvorrichtung in allen Winkellagen relativ zur Aussparung verwenden zu können.

In einer möglichen Ausgestaltung der Erfindung ist die Aussparung kreisförmig und/oder elliptisch. Insbesondere ist die Aussparung ein Kreissegment, wie beispielsweise ein Halbkreissegment. Alternativ ist die Aussparung ein beliebiges Polygon, wie beispielsweise ein Dreieck, ein Rechteck oder ein Sechseck. Insbesondere ist die Aussparung so ausgebildet, dass der verbleibende Raumwinkel, der von dem Gehäuse aufgespannt wird, möglichst groß ist. Insbesondere ist es möglich, dass die Aussparung an die Form der Halterung und/oder der Handhabungsvorrichtung und/oder das Objekt angepasst ist. Insbesondere sind die um die Öffnung angeordneten Lichtquellen für ein Gehäuse mit Aussparung lorbeerkranzartig angeordnet. Vorzugsweise ist die Aussparung mindestens teilweise außerhalb der von der Öffnung aufgespannten Ebene und/oder der Aufnahmeebene angeordnet. Dieser Ausgestaltung liegt die Überlegung zugrunde, eine Prüfvorrichtung mit Gehäuse bereitzustellen, welches durch die Aussparung möglichst wenig beeinflusst und/oder reduziert wird, sodass beispielsweise möglichst wenig Streu- und/oder Störlicht auf die Kamera und/oder die Aufnahmeebene fällt.

In einer besonders bevorzugten Ausgestaltung der Erfindung sind die Lichtquellen gleichförmig und/oder äquidistant um die Öffnung im Gehäuse angeordnet. Insbesondere sind die Lichtquellen gleichförmig und/oder äquidistant auf der Kante angeordnet, welche die Begrenzung von Öffnung zu Gehäuse bildet. Vorzugsweise sind die Lichtquellen so um die Öffnung angeordnet, dass sich die Lichtquellen gegenseitig berühren und/oder tangieren. Ferner ist es möglich, dass die Lichtquellen äquidistant und/oder gleichförmig in dem gesamten Gehäuse der Prüfvorrichtung angeordnet sind, beispielsweise gleich viele in jedem Raumwinkel Teil Delta Theta (ΔΩ). Dieser Ausgestaltung liegt die Überlegung zugrunde, eine Prüfvorrichtung bereitzustellen, welche eine möglichst gleichförmige und konstante Beleuchtung des Objekts in der Aufnahmeebene ermöglicht.

Erfindungsgemäß weisen die Lichtquellen eine Abstrahlrichtung auf. Die Abstrahlrichtung ist insbesondere die Richtung, in welche die Lichtquelle Licht mit maximaler Intensität abstrahlt. Die Abstrahlrichtung einer jeden

### (Fortsetzung ursprüngliche Beschreibungsseite 7)

Lichtquelle schließt mit der Aufnahmerichtung der Hauptkamera jeweils einen Beleuchtungswinkel ein. Der Beleuchtungswinkel mindestens einer der Lichtquellen ist veränderbar, insbesondere sind die Beleuchtungswinkel aller Lichtquellen veränderbar. Vorzugsweise ist der Beleuchtungswinkel ausrichtbar, im Speziellen reversibel ausrichtbar. Beispielsweise umfasst die Lichtquelle einen Sockel und/oder eine Fassung, wobei der Sockel und/oder die Fassung schwenkbar auf dem Gehäuse und/oder der Kante zum Verändern des Beleuchtungswinkels angeordnet ist. Dieser Ausgestaltung liegt die Überlegung zugrunde, eine Prüfvorrichtung bereitzustellen, bei der die Beleuchtungswinkel der Lichtquellen einstellbar und/oder justierbar sind, sodass für ein Objekt eine bestmögliche Ausleuchtung und/oder Beleuchtung während der Prüfung möglich ist.

Besonders bevorzugt ist es, dass das Gehäuse domförmig und/oder eine Halbkugel ist. Insbesondere ist das Gehäuse kuppelförmig. Ferner ist es möglich, dass das Gehäuse beispielsweise zylindrisch, kegelförmig und/oder konisch ausgebildet ist. Insbesondere weist das domförmige und/oder halbkugelförmige Gehäuse eine Öffnung auf, welche beispielsweise eine ebene Schnittfläche darstellt. Dieser Ausgestaltung liegt die Überlegung zugrunde, ein Gehäuse bereitzustellen, welches einen möglichst geräumigen Innenraum aufweist, so dass in dem Innenraum das Objekt gut handhabbar und/oder drehbar ist.

Besonders bevorzugt ist es, dass die Prüfvorrichtung eine Mehrzahl an Hilfskameras aufweist. Insbesondere weist die Prüfvorrichtung mehr als zehn Hilfskameras, im Speziellen mehr als zwanzig Hilfskameras und vorzugsweise mehr als dreißig Hilfskameras auf. Die Hilfskameras sind insbesondere Digitalkameras und/oder Bildsensoren. Die Hilfskameras sind beispielsweise als Farbkameras oder als Schwarz-Weiß-Kameras ausgebildet. Insbesondere weisen die Hilfskameras jeweils eine Kameraeinheit auf, wobei die Kameraeinheit den Bildsensor zur Aufnahme eines Bildes umfasst. Vorzugsweise weist die Kameraeinheit einen Durchmesser von kleiner als fünf Millimeter und im Speziellen von kleiner als zwei Millimeter auf. Die Hilfskameras sind im Gehäuse angeordnet. Insbesondere sind die Hilfskameras um die Hauptkamera angeordnet. Besonders bevorzugt ist es, dass die Hilfskameras um die Öffnung des Gehäuses angeordnet sind.

Die Hilfskameras sind ausgebildet, Hilfsbilder des Objektes aufzunehmen. Insbesondere bilden die Hilfsbilder einen Teilbereich und/oder das gesamte Objekt im Aufnahmebereich ab. Die Hilfsbilder weisen insbesondere mindestens einen Überlapp mit mindestens einem der Objektbilder auf. Insbesondere sind die Hilfskameras so angeordnet, dass sie das Objekt in der Aufnahmeebene scharf und/oder kontrastreich abbilden können. Alternativ und/oder ergänzend sind die Hilfskameras so angeordnet, dass sie das Objekt außerhalb der Aufnahmeebene scharf und/oder kontrastreich abbilden können. Die Auswerteeinheit ist vorzugsweise ausgebildet, auf Basis der Hilfsbilder die Topografie des Objektes zu bestimmen. Insbesondere ist die Auswerteeinheit ausgebildet, basierend auf den Hilfsbildern die basierend auf den Objektbildern bestimmte Topografie zu verfeinern und/oder zu ergänzen. Alternativ und/oder ergänzend ist die Auswerteeinheit ausgebildet, auf Basis der Hilfsbilder die Topografie des Objektes in Bereichen zu ergänzen, die nicht von den Objektbildern abgedeckt war. Vorzugsweise sind die Hilfskameras so angeordnet, dass sie einen Perspektivwechsel der Aufnahme des Objektes ermöglichen. Dieser Ausgestaltung liegt die Übelregung zugrunde, eine Prüfvorrichtung bereitzustellen, welche durch das Heranziehen von Hilfskameras, mehrere Bilder, Perspektiven und/oder Ansichten des Objektes bereitstellt, wobei so die Topografie auf Basis der Hilfsbilder und der Objektbilder bestimmbar ist, sodass beispielsweise eine besonders akkurate Vermessung der Topografie des Objektes möglich ist.

In einer möglichen Ausgestaltung der Erfindung ist es vorgesehen, dass die Hilfskameras unterschiedliche Brennweiten aufweisen und/oder unterschiedliche Aufnahmebereiche abbilden. Insbesondere weisen die Hilfskameras verstellbare und/oder einstellbare Brennweiten auf. Vorzugsweise ist der Aufnahmebereich der Hilfskameras größer und/oder gleich dem Aufnahmebereich der Hauptkamera. Dieser Ausgestaltung liegt die Überlegung zugrunde, durch das Verwenden von mehreren Hilfskameras eine Prüfvorrichtung bereitzustellen, welche die Abbildung des Objektes mit unterschiedlichen Brennweiten und/oder Objektausschnitten ermöglicht, wobei die Lebensdauer der Prüfvorrichtung nicht durch eine maximale Zoomzyklenzahl der Hauptkamera eingeschränkt ist.

Vorzugsweise weisen die Hilfskameras eine Elektronikplatine und die Kameraeinheit auf. Die Kameraeinheit umfasst insbesondere eine Optikeinheit, wie beispielsweise ein Objektiv und/oder eine Linse, sowie einen Bildsensor. Die Kameraeinheit ist und/oder umfasst beispielsweise eine CCD oder eine CMOS-Kamera. Die Elektronikplatine ist ausgebildet, die Kameraeinheit zu steuern, mit Strom zu versorgen und/oder die Daten von aufgenommenen Bildern zu archivieren und/oder einem Benutzer bereitzustellen. Die Elektronikplatine ist vorzugsweise mittels einer flexiblen Verbindung mit der Kameraeinheit verbunden. Die flexible Verbindung ist beispielsweise ein flexibles Kabel. Insbesondere ist die Kameraeinheit im Gehäuse der Prüfvorrichtung angeordnet, wobei die Elektronikplatine außerhalb des Gehäuses der Prüfvorrichtung angeordnet ist, wobei die flexible Verbindung die Kameraeinheit im Gehäuse mit der Elektronikplatine außerhalb des Gehäuses verbindet. Dieser Ausgestaltung liegt die Überlegung zugrunde, die Hilfskameras mit minimalem Footprint und/oder Verdeckungsgrad der Hauptkamera im Gehäuse anzuordnen, indem der Elektronikteil der Kameraeinheit außerhalb des Gehäuses angeordnet ist, wodurch dieser das Blickfeld der Hauptkamera nicht einschränken kann.

Besonders bevorzugt ist es, dass das Innere der Gehäuse reflektierend ist. Beispielsweise ist das Innere der Gehäuse eine spiegelnde Oberfläche, wie beispielsweise ein versilberter Spiegel. Alternativ ist das Gehäuse auf der Innenseite absorbierend, wie beispielsweise matt schwarz, und als ein Lichtfänger von Stör- und/oder Streulicht ausgebildet. Insbesondere ist der Absorptionskoeffizient des Gehäuses auf der Innenseite ungefähr 1. Dieser Ausgestaltung liegen die Überlegungen zugrunde, eine Prüfvorrichtung bereitzustellen, welche Licht besonders gut streut und das Objekt in der Aufnahmeebene möglichst gut ausleuchtet und andererseits die Überlegung, Streulicht möglichst gut abzufangen, sodass die Topologie des Objektes möglichst einfach zu rekonstruieren ist.

Besonders bevorzugt ist es, dass die Öffnung im Gehäuse eine Öffnungsebene definiert. Vorzugsweise ist die Öffnungsebene eine flache und/oder ebene Ebene. Alternativ ist die Öffnungsebene eine gekrümmte Fläche. Insbesondere fallen die Öffnungsebene und die Aufnahmeebene zusammen. Alternativ und/oder ergänzend sind die Öffnungsebene und die Aufnahmeebene parallel zueinander versetzt. Dieser Ausgestaltung liegt die Überlegung zugrunde, eine Prüfvorrichtung bereitzustellen, bei der bei der Vermessung des Objektes möglichst wenig umgebendes Licht der Prüfvorrichtung die Messung stört, wobei sich das Objekt bei der Prüfung genau in der Öffnungsebene befindet und so die Öffnungsebene teilweise verschließt.

Einen weiteren Gegenstand der Erfindung bildet eine Objektprüfungsanordnung. Die Objektprüfungsanordnung umfasst eine Prüfvorrichtung nach einem der Ansprüche 1 bis 12 und/oder der vorherigen Beschreibung sowie mindestens eine Handhabungsvorrichtung zum Handhaben und/oder Halten des Objektes. Die Handhabungsvorrichtung ist beispielsweise ein Roboter, ein Roboterarm und/oder ein Achsensystem, wobei in dem Handhabungssystem das Objekt beispielsweise einspannbar ist. Die Handhabungsvorrichtung ist ausgebildet, das Objekt zu halten, zu positionieren und/oder zu drehen. Ferner ist die Handhabungsvorrichtung ausgebildet, das Objekt in der Aufnahmeebene mindestens teilweise zu drehen und/oder zu schwenken, wobei die Prüfvorrichtung die Topologie des Objektes aufnimmt, während das Objekt in der Aufnahmeebene von der Handhabungsvorrichtung gehalten wird. Insbesondere ist die Handhabungsvorrichtung ausgebildet, das Objekt während der Bestimmung der Topologie durch die Prüfvorrichtung zu rotieren, sodass die Objektprüfungsanordnung ausgebildet ist, die Topologie des gesamten Objektes und/oder annähernd des ganzen Objektes zu bestimmen. Insbesondere ist die Objektprüfungsanordnung ausgebildet, eine Rundum-Inspektion des Objektes durchzuführen. Die Objektprüfungsanordnung stellt damit eine Möglichkeit bereit, ein Objekt mit einer Handhabungsvorrichtung zu handhaben und/oder zu halten, während es von einer Prüfvorrichtung vermessen wird, wobei die Handhabungsvorrichtung kollisionsfrei mit der Prüfvorrichtung interagieren kann.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine Prüfvorrichtung;
Figur 2 eine Hilfskamera mit Elektronikplatine und Kameraeinheit.

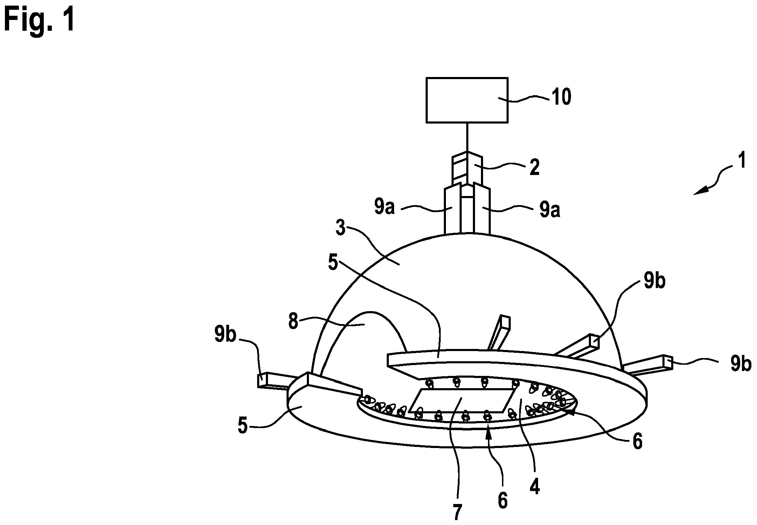

Figur 1 zeigt eine Prüfvorrichtung 1 mit einer Hauptkamera 2 und einem Gehäuse 3. Das Gehäuse 3 ist ein kuppelförmiger Hohlkörper, in diesem Ausführungsbeispiel ein halbkugelförmiger Hohlkörper. Der halbkugelförmige Hohlkörper ist insbesondere in der Äquatorialebene aufgeschnitten. Das Gehäuse 3 weist eine Öffnung 4 auf, wobei die Öffnung 4 in diesem Ausführungsbeispiel eine kreisförmige Öffnung 4 ist. Das Gehäuse 3 weist einen Außenbereich und einen Innenbereich auf, wobei der Innenbereich vorzugsweise reflektierend ist, alternativ und/oder ergänzend ist der Innenbereich absorbierend. Auf der der Öffnung 4 entgegenliegenden Seite des Gehäuses 3, in diesem Ausführungsbeispiel einem Pol des halbkugelförmigen Gehäuses 3, ist die Hauptkamera 2 angeordnet.

Die Hauptkamera 2 weist eine Aufnahmerichtung auf, wobei die Aufnahmerichtung der Hauptkamera 2 in Richtung der Öffnung 4 des Gehäuses 3 gerichtet ist. Insbesondere weist die Kamera 2 eine Brennweite auf, sodass der Bereich der Öffnung 4 des Gehäuses 3 scharf und/oder kontrastreich abbildbar durch die Hauptkamera 2 ist. Insbesondere weist die Hauptkamera 2 einen Elektronikteil auf, wobei der Elektronikteil außerhalb des Gehäuses 3 angeordnet ist, so dass insbesondere nur Linse und/oder Objektiv der Hauptkamera 2 im Gehäuse 3 mit Blickrichtung auf die Öffnung 4 angeordnet ist.

Das Gehäuse 3 weist eine Kante 5 auf, wobei die Kante 5 die Grenze des Gehäuses 3 zu der Öffnung 4 bildet. Die Kante 5 ist in diesem Ausführungsbeispiel kreisrund ausgebildet. Entlang der Kante 5, insbesondere um die Öffnung 4 herum, sind Lichtquellen 6 angeordnet. Die Lichtquellen 6 sind insbesondere Leuchtdioden. Die Lichtquellen 6 weisen eine Abstrahlrichtung auf, wobei in diesem Ausführungsbeispiel die Abstrahlrichtung der Lichtquellen 6 zentral ins Zentrum der kreisrunden Öffnung 4 gerichtet ist. Insbesondere sind die Lichtquellen 6 schwenkbar an der Kante 5 angeordnet, sodass der Winkel zwischen Aufnahmerichtung der Hauptkamera 2 und der Abstrahlrichtung der Lichtquellen 6 veränderbar ist. In diesem Ausführungsbeispiel ist der von Abstrahlrichtung der Lichtquellen 6 und der Aufnahmerichtung der Hauptkamera 2 eingeschlossene Winkel, insbesondere der Beleuchtungswinkel, 90 Grad. Vorzugsweise sind die Beleuchtungswinkel der Lichtquellen 6 elektronisch verstellbar und/oder nachstellbar. Die Lichtquellen 6 sind ausgebildet, den Bereich der Öffnung 4 zu beleuchten, wobei zur Beleuchtung alle und/oder nur Teile der Lichtquellen 6 nutzbar sind. Insbesondere sind die Lichtquellen 6 ausgebildet, eine unterschiedliche Beleuchtung der Öffnung 4 zu ermöglichen, beispielsweise durch Veränderung der Lichtfarbe und/oder der aktiven Lichtquellen 6.

Die Öffnung 4 spannt insbesondere eine Ebene auf, wobei diese Ebene mit der Aufnahmeebene der Hauptkamera 2 zusammenfällt. In der Aufnahmeebene der Hauptkamera 2 ist ein Objekt 7 anordenbar. Das Objekt 7 ist beispielsweise ein Elektronikbauteil oder ein mechanisches Bauteil. Insbesondere umfasst das Objekt 7 eine glänzende Oberfläche. Vorzugsweise ist das Objekt 7 im Bereich der Aufnahmeebene schwenkbar und/oder rotierbar.

Die Prüfvorrichtung 1 und/oder das Gehäuse 3 weist eine Aussparung 8 auf. Die Aussparung 8 ist insbesondere eine Ausnehmung des Gehäuses 3. Die Aussparung 8 schließt insbesondere direkt an die Öffnung 4 an. Die Aussparung 8 ist in diesem Ausführungsbeispiel eine halbkreisförmige Aussparung im Gehäuse. Die Aussparung 8 ist ausgebildet, eine Halterung des Objekts 7 und/oder eine Handhabungsvorrichtung für das Objekt 7 aufnehmen zu können, beispielsweise ein Achsensystem, welches das Objekt 7 in der Öffnung 4 hält. Vorzugsweise ist die Aussparung 8 kleiner oder gleich dem Durchmesser des Objektes 7, wobei die Aussparung 8 hierbei nur zur Aufnahme des Handhabungssystems und/oder der Halterung ausgebildet ist.

Die Prüfvorrichtung 1 umfasst eine Mehrzahl an Hilfskameras 9a und 9b. Die Hilfskameras 9a und 9b sind als Digitalkameras ausgebildet und so in dem Gehäuse 3 angeordnet, dass sie das Objekt 7 in dem Aufnahmebereich und/oder der Öffnung 4 scharf und/oder kontrastreich abbilden können. Die Hilfskameras 9a sind direkt an die Hauptkamera 2 angrenzend, und mit ihrer Aufnahmerichtung parallel zur Aufnahmerichtung der Hauptkamera 2 ausgerichtet. Die Hilfskameras 9a weisen insbesondere eine andere Brennweite und/oder Schärfentiefe als die Hauptkamera 2 auf. Die Hilfskameras 9b sind insbesondere im Bereich der Kante 5 des Gehäuses 3 angeordnet. Die Hilfskameras 9a und 9b sind ebenfalls mit Aufnahmerichtung auf das Objekt 7 gerichtet. Insbesondere schließt die Aufnahmerichtung der Hilfskameras 9b mit der Aufnahmerichtung der Hauptkamera 2 einen Winkel von größer als 80 Grad ein. Die Hilfskameras 9b sind ausgebildet, Hilfsbilder des Objektes 7 aufzunehmen. Die Hauptkamera 2 ist ausgebildet, Objektbilder des Objekts 7 aufzunehmen.

Die Prüfvorrichtung 1 weist eine Auswerteeinheit 10 auf, wobei die Auswerteeinheit 10 ausgebildet ist, basierend auf den Objektbildern, welche durch die Hauptkamera 2 aufgenommen wurden, sowie basierend auf den Hilfsbildern, welche von den Hilfskameras 9a, 9b aufgenommen wurden, die Topografie und/oder eine Neigungskarte des Objektes 7 zu bestimmen. Die Auswerteeinheit 10 ist beispielsweise als ein Mikrochip, ein Mikrocontroller und/oder als eine Computereinheit ausgebildet. Insbesondere ist es möglich, dass die Auswerteeinheit 10 in die Hauptkamera 2 integriert ist.

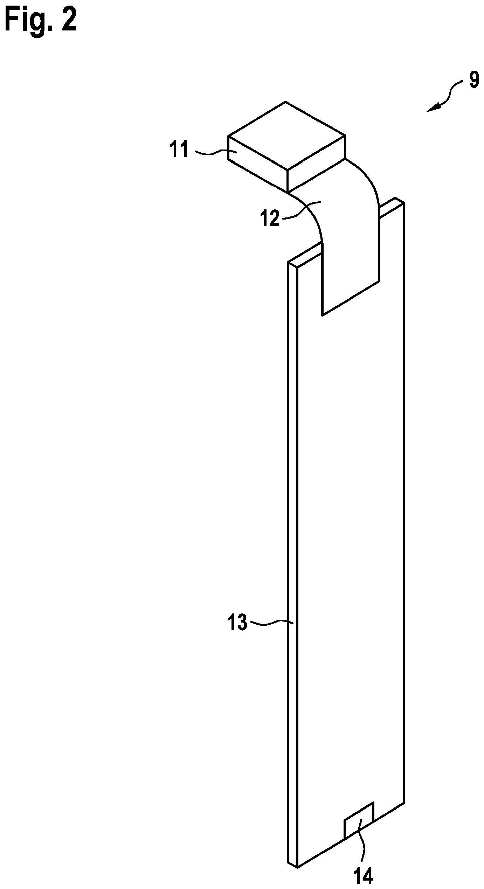

Figur 2 zeigt eine Hilfskamera 9. Die Hilfskamera 9 weist eine Kameraeinheit 11, eine flexible Verbindung 12 und eine Elektronikplatine 13 auf. Die Kameraeinheit 11 umfasst insbesondere einen Kamerasensor, beispielsweise wie einen CCD- oder CMOS-Chip. Ferner umfasst die Kameraeinheit 11 eine Objektiveinheit, wobei die Objektiveinheit beispielsweise eine Linse umfasst. Die Objektiveinheit ist ausgebildet, ein Bild scharf auf den Kamerasensor abzubilden. Die Kameraeinheit 11 weist vorzugsweise einen Durchmesser von weniger als zehn Millimetern auf.

Die Elektronikplatine 13 ist ausgebildet, die Kameraeinheit 11 zu steuern und/oder mit Strom zu versorgen. Insbesondere umfasst die Elektronikplatine 13 alle elektronischen Komponenten, die zur Steuerung oder Auswertung von Daten der Kameraeinheit 11 nötig sind. Vorzugsweise umfasst die Elektronikplatine 13 eine Platinenschnittstelle 14. Die Platinenschnittstelle 14 ist ausgebildet, die von der Hilfskamera 9 und im Speziellen von der Kameraeinheit 11 bereitgestellten Hilfsbilder datentechnisch bereitzustellen. Insbesondere ist die Platinenschnittstelle 14 datentechnisch koppelbar mit der Auswerteeinheit 10 der Prüfvorrichtung 1.

Die Elektronikplatine 13 ist mit der Kameraeinheit 11 über eine flexible Verbindung 12 verbunden. Die flexible Verbindung 12 ist beispielsweise ein flexibles Kabel, welches die Kameraeinheit 11 datentechnisch und/oder elektronisch mit der Elektronikplatine 13 verbindet. Insbesondere ist die flexible Verbindung 12 ausgebildet, die Kameraeinheit 11 auszurichten. Die flexible Verbindung 12 ist vorzugsweise biegesteif, alternativ ist die flexible Verbindung 12 biegeschlaff. Die flexible Verbindung 12 ist ausgebildet als eine Durchführung von der Innenseite des Gehäuses 3 zur Außenseite des Gehäuses 3 der Prüfvorrichtung, wobei die flexible Verbindung die in der Innenseite des Gehäuses 3 befindliche Kameraeinheit 11 mit der auf der Außenseite des Gehäuses 3 befindlichen Elektronikplatine 13 verbindet.

## Patentansprüche

1. Prüfvorrichtung (1) zur optischen, insbesondere deflektometrischen, Prüfung eines Objekts (7),
mit einem Gehäuse (3), wobei das Gehäuse (3) ein Hohlkörper mit einer Öffnung (4) ist, wobei das Objekt (7) zur Prüfung in der Öffnung (4) positionierbar ist,
mit einer Hauptkamera (2), wobei die Hauptkamera (2) eine Aufnahmerichtung und Aufnahmeebene aufweist, wobei die Hauptkamera (2) mit der Aufnahmerichtung zur Öffnung (4) des Gehäuse (3) angeordnet ist,
wobei die Prüfvorrichtung (1) eine Mehrzahl an Lichtquellen (6) umfasst, wobei die Lichtquellen (6) um die Öffnung (4) angeordnet sind, wobei die Lichtquellen (6) zur veränderbaren Beleuchtung der Aufnahmeebene ausgebildet sind,
wobei die Hauptkamera (2) ausgebildet, für das in der Aufnahmeebene liegende Objekt (7) eine Mehrzahl an Objektbildern aufzunehmen,
mit einer Auswerteeinheit (10), wobei die Auswerteeinheit (10) ausgebildet ist, auf Basis der Objektbilder eine Topographie des Objektes (7) zu bestimmen,
**dadurch gekennzeichnet, dass**
das Gehäuse (1) eine Aussparung (8) aufweist, wobei die Aussparung (8) eine Durchführung und/oder Aufnahme für eine Halterung und/oder Handhabungsvorrichtung des Objekts (7) bildet,
wobei das Gehäuse (3) eine Kante (5) aufweist, wobei die Kante (5) die Grenze des Gehäuses (3) zu der Öffnung (4) bildet, wobei die Lichtquellen (6) entlang der Kante (5) angeordnet sind,
wobei die Lichtquellen (6) eine Abstrahlrichtung aufweisen, wobei die Abstrahlrichtung jeder Lichtquelle (6) mit der Aufnahmerichtung jeweils einen Beleuchtungswinkel einschließt, wobei der Beleuchtungswinkel mindestens einer der Lichtquellen (6) veränderbar ist.

2. Prüfvorrichtung (1) nach Anspruch 1, **dadurch gekennzeichnet, dass** die Aussparung (8) an der Öffnung (4) anschließt.

3. Prüfvorrichtung (1) nach Anspruch 1 oder 2, **dadurch gekennzeichnet, dass** die Aussparung (8) ein Kreissegment und/oder elliptisch ist.

4. Prüfvorrichtung (1) nach einem der vorherigen Ansprüche, **dadurch gekennzeichnet, dass** die Lichtquellen (6) lorbeerkranzartig und/oder unterbrochen durch die Aussparung (8) um die Öffnung (4) angeordnet sind.

5. Prüfvorrichtung (1) nach einem der vorherigen Ansprüche, **dadurch gekennzeichnet, dass** die Prüfvorrichtung (1) einen Spezialprüfzustand aufweist, wobei die Halterung und/oder die Handhabungsvorrichtung teilweise in der Aussparung (8) angeordnet ist und das Objekt (7) in der Aufnahmeebene positioniert ist.

6. Prüfvorrichtung (1) nach einem der vorherigen Ansprüche, **dadurch gekennzeichnet, dass** die Lichtquellen (6) gleichförmig und/oder äquidistant um die Öffnung (4) angeordnet sind.

7. Prüfvorrichtung (1) nach einem der vorherigen Ansprüche, **dadurch gekennzeichnet, dass** das Gehäuse (3) domförmig und/oder eine Halbkugel ist.

8. Prüfvorrichtung (1) nach einem der vorherigen Ansprüche, **gekennzeichnet durch** eine Mehrzahl an Hilfskameras (9, 9a, 9b), wobei die Hilfskameras (9, 9a, 9b) im Gehäuse um die Hauptkamera angeordnet sind, wobei die Hilfskameras (9, 9a, 9b) ausgebildet sind, Hilfsbilder des Objektes (7) aufzunehmen, wobei die Auswerteeinheit (10) ausgebildet ist, auf Basis der Hilfsbilder die Topographie des Objektes (7) zu bestimmen und/oder die bestimmte Topografie zu verbessern.

9. Prüfvorrichtung (1) nach Anspruch 8, **dadurch gekennzeichnet, dass** die Hilfskameras (9, 9a, 9b) unterschiedliche Brennweiten aufweisen und/oder unterschiedliche Aufnahmebereiche abbilden.

10. Prüfvorrichtung (1) nach einem der vorherigen Ansprüche, **dadurch gekennzeichnet, dass** die Hilfskamera (9, 9a, 9b) eine Elektronikplatine (13) und eine Kameraeinheit (11) aufweist, wobei die Elektronikplatine (13) mit der Kameraeinheit (11) mittels einer flexiblen Verbindung (12) verbunden ist, wobei die Kameraeinheit (11) im Gehäuse (3) angeordnet ist und die Elektronikplatine (13) außerhalb des Gehäuses (3) angeordnet ist.

11. Prüfvorrichtung (1) nach einem der vorherigen Ansprüche, **dadurch gekennzeichnet, dass** Gehäuse (3) auf der Innenseite reflektierend oder absorbierend ist.

12. Prüfvorrichtung (1) nach einem der vorherigen Ansprüche, **dadurch gekennzeichnet, dass** die Öffnung (4) eine Öffnungsebene definiert, wobei die Öffnungsebene und die Aufnahmeebene zusammenfallen.

13. Objektprüfungsanordnung, **gekennzeichnet durch** eine Prüfvorrichtung (1) nach einem der Ansprüche 1-12 und einer Handhabungsvorrichtung zum Handhaben und/oder Halten des Objektes (7), wobei die Handhabungsvorrichtung ausgebildet ist, das Objekt (7) in der Aufnahmeebene mindestens teilweise zu drehen und/oder zu schwenken.

## Claims

1. Inspection device (1) for the optical inspection, more particularly deflectometric inspection, of an object (7),
having a housing (3), wherein the housing (3) is a hollow body with an opening (4), wherein the object (7) is positionable in the opening (4) for inspection purposes,
having a main camera (2), wherein the main camera (2) has a recording direction and a recording plane, wherein the main camera (2) is arranged with the recording direction towards the opening (4) of the housing (3),
wherein the inspection device (1) comprises a plurality of light sources (6), wherein the light sources (6) are arranged around the opening (4), wherein the light sources (6) are designed for variable illumination of the recording plane,
wherein the main camera (2) is designed to record a plurality of object images for the object (7) located in the recording plane,
having an evaluation unit (10), wherein the evaluation unit (10) is designed to determine a topography of the object (7) on the basis of the object images,
**characterized in that**
the housing (1) has a cutout (8), wherein the cutout (8) forms a feed-through and/or receptacle for a holder and/or handling device of the object (7),
wherein the housing (3) has an edge (5), wherein the edge (5) forms the boundary of the housing (3) with respect to the opening (4), wherein the light sources (6) are arranged along the edge (5),
wherein the light sources (6) have an emission direction, wherein the emission direction of each light source (6) includes a respective illumination angle with the recording direction, wherein the illumination angle of at least one of the light sources (6) is adjustable.

2. Inspection device (1) according to Claim 1, **characterized in that** the cutout (8) adjoins the opening (4).

3. Inspection device (1) according to Claim 1 or 2, **characterized in that** the cutout (8) is a circular segment and/or elliptical.

4. Inspection device (1) according to any of the preceding claims, **characterized in that** the light sources (6) are arranged laurel-wreath-like and/or with interruptions through the cutout (8) around the opening (4) .

5. Inspection device (1) according to any of the preceding claims, **characterized in that** the inspection device (1) has a special test state, wherein the holder and/or the handling device are partly arranged within the cutout (8) and the object (7) is positioned in the recording plane.

6. Inspection device (1) according to any of the preceding claims, **characterized in that** the light sources (6) are arranged similarly and/or equidistantly about the opening (4).

7. Inspection device (1) according to any of the preceding claims, **characterized in that** the housing (3) is dome-shaped and/or a hemisphere.

8. Inspection device (1) according to any of the preceding claims, **characterized by** a plurality of auxiliary cameras (9, 9a, 9b), wherein the auxiliary cameras (9, 9a, 9b) are arranged in the housing around the main camera, wherein the auxiliary cameras (9, 9a, 9b) are designed to record auxiliary images of the object (7), wherein the evaluation unit (10) is designed to determine the topography of the object (7) and/or improve the determined topography on the basis of the auxiliary images.

9. Inspection device (1) according to Claim 8, **characterized in that** the auxiliary cameras (9, 9a, 9b) have different focal lengths and/or image different recording regions.

10. Inspection device (1) according to any of the preceding claims, **characterized in that** the auxiliary camera (9, 9a, 9b) has an electronics circuit board (13) and a camera unit (11), wherein the electronics circuit board (13) is connected to the camera unit (11) by means of a flexible connection (12), wherein the camera unit (11) is arranged in the housing (3) and the electronics circuit board (13) is arranged outside the housing (3).

11. Inspection device (1) according to any of the preceding claims, **characterized in that** the housing (3) is reflective or absorbing on the inner side.

12. Inspection device (1) according to any of the preceding claims, **characterized in that** the opening (4) defines an opening plane, wherein the opening plane and the recording plane coincide.

13. Object inspection arrangement, **characterized by** an inspection device (1) according to any of Claims 1-12 and a handling device for handling and/or holding the object (7), wherein the handling device is designed to at least partly rotate and/or pivot the object (7) in the recording plane.

## Revendications

1. Dispositif de contrôle (1) pour le contrôle optique, en particulier déflectométrique, d'un objet (7),
comprenant un boîtier (3), le boîtier (3) étant un corps creux muni d'une ouverture (4), l'objet (7) pouvant être positionné dans l'ouverture (4) pour le contrôle,
comprenant une caméra principale (2), la caméra principale (2) présentant une direction d'enregistrement et un plan d'enregistrement, la caméra principale (2) étant disposée avec la direction d'enregistrement vers l'ouverture (4) du boîtier (3),
dans lequel le dispositif de contrôle (1) comprend une pluralité de sources de lumière (6), les sources de lumière (6) étant disposées autour de l'ouverture (4), les sources de lumière (6) étant réalisées pour un éclairage variable du plan d'enregistrement,
dans lequel la caméra principale (2) est réalisée pour enregistrer une pluralité d'images d'objet pour l'objet (7) situé dans le plan d'enregistrement,
comprenant une unité d'évaluation (10), l'unité d'évaluation (10) étant réalisée pour déterminer une topographie de l'objet (7) sur la base des images d'objet,
**caractérisé en ce que** le boîtier (1) présente un évidement (8), l'évidement (8) formant un passage et/ou un logement pour un support et/ou un dispositif de manipulation de l'objet (7),
dans lequel le boîtier (3) présente une arête (5), l'arête (5) formant la limite du boîtier (3) par rapport à l'ouverture (4), les sources de lumière (6) étant disposées le long de l'arête (5),
dans lequel les sources de lumière (6) présentent une direction de rayonnement, la direction de rayonnement de chaque source de lumière (6) formant avec la direction d'enregistrement respectivement un angle d'éclairage, l'angle d'éclairage d'au moins l'une des sources de lumière (6) étant variable.

2. Dispositif de contrôle (1) selon la revendication 1, **caractérisé en ce que** l'évidement (8) est contigu à l'ouverture (4).

3. Dispositif de contrôle (1) selon la revendication 1 ou 2, **caractérisé en ce que** l'évidement (8) est un segment de cercle et/ou est elliptique.

4. Dispositif de contrôle (1) selon l'une quelconque des revendications précédentes, **caractérisé en ce que** les sources de lumière (6) sont disposées autour de l'ouverture (4) en forme de couronne de laurier et/ou en étant interrompues par l'évidement (8).

5. Dispositif de contrôle (1) selon l'une quelconque des revendications précédentes, **caractérisé en ce que** le dispositif de contrôle (1) présente un état de contrôle spécial, dans lequel le support et/ou le dispositif de manipulation est disposé partiellement dans l'évidement (8) et l'objet (7) est positionné dans le plan d'enregistrement.

6. Dispositif de contrôle (1) selon l'une quelconque des revendications précédentes, **caractérisé en ce que** les sources de lumière (6) sont disposées autour de l'ouverture (4) de manière homogène et/ou équidistance.

7. Dispositif de contrôle (1) selon l'une quelconque des revendications précédentes, **caractérisé en ce que** le boîtier (3) est en forme de dôme et/ou d'hémisphère.

8. Dispositif de contrôle (1) selon l'une quelconque des revendications précédentes, **caractérisé par** une pluralité de caméras auxiliaires (9, 9a, 9b), les caméras auxiliaires (9, 9a, 9b) étant disposées dans le boîtier autour de la caméra principale, les caméras auxiliaires (9, 9a, 9b) étant réalisées pour enregistrer des images auxiliaires de l'objet (7), l'unité d'évaluation (10) étant réalisée pour déterminer sur la base des images auxiliaires la topographie de l'objet (7) et/ou pour améliorer la topographie déterminée.

9. Dispositif de contrôle (1) selon la revendication 8, **caractérisé en ce que** les caméras auxiliaires (9, 9a, 9b) présentent différentes distances focales et/ou différentes zones d'enregistrement.

10. Dispositif de contrôle (1) selon l'une quelconque des revendications précédentes, **caractérisé en ce que** la caméra auxiliaire (9, 9a, 9b) présente une platine électronique (13) et une unité de caméra (11), la platine électronique (13) étant reliée à l'unité de caméra (11) au moyen d'une connexion flexible (12), l'unité de caméra (11) étant disposée à l'intérieur du boîtier (3) et la platine électronique (13) étant disposée à l'extérieur du boîtier (3).

11. Dispositif de contrôle (1) selon l'une quelconque des revendications précédentes, **caractérisé en ce que** le boîtier (3) est réfléchissant ou absorbant sur la face intérieure.

12. Dispositif de contrôle (1) selon l'une quelconque des revendications précédentes, **caractérisé en ce que** l'ouverture (4) définit un plan d'ouverture, dans lequel le plan d'ouverture et le plan d'enregistrement coïncident.

13. Ensemble de contrôle d'objet, **caractérisé par** un dispositif de contrôle (1) selon l'une quelconque des revendications 1 à 12 et un dispositif de manipulation pour manipuler et/ou maintenir l'objet (7), dans lequel le dispositif de manutention est réalisé pour au moins partiellement faire tourner et/ou pivoter l'objet (7) dans le plan d'enregistrement.
